# EUROPEAN PATENT SPECIFICATION

(11) **EP 0 553 599 B1**
(45) Date of publication and mention of the grant of the patent: **14.01.1998**
(21) Application number: 92830041.7
(22) Date of filing: 31.01.1992
(51) Int. Cl.: B01D 17/02, B01D 21/00

(54) **Liquid separating device**
Flüssigkeitstrennvorrichtung
Dispositif pour la séparation de liquides

(43) Date of publication of application: 04.08.1993
(73) Proprietor: HYDROTECH S.r.l., I-20121 Milano (IT)
(72) Inventor: Amichay, Jacob, I-20121 Milano (IT)
(74) Representative: Iannone, Carlo Luigi

(56) References cited:
- EP-A- 0 412 658
- FR-A- 1 064 620
- FR-A- 2 079 286
- FR-A- 2 177 464
- GB-A- 1 490 207
- GB-A- 2 166 967
- US-A- 4 133 771

## Description

This invention relates to a device, designed for the separation of at least two immiscible liquids, of different specific gravities or densities, for example: oil and water.

Gravity separators utilize gravity for the separation of the immiscible constituents of a liquid mass, i.e. to separate substances of high density from those of low density. If the substance is liquid, it is common for the liquid of higher density to be referred to as the "carrier liquid" and the liquid of lower density to be referred to as the "surface liquid". Hereinafter the two abovementioned terms shall be used. The means of delivery of liquid to a separator may be in the form of pumped-flow or gravity-flow. In either case, the liquid is disturbed to a great extent and fine particles of the surface liquid are dispersed in the carrier liquid. This is caused by the agitation of the liquid by the pump or orifice in the flow to the gravity separator.

Upon entry into the separator, the large globules of surface liquid float quickly to the surface of the carrier liquid and the said surface liquid is discharged through outlets provided, usually above the level of the carrier liquid, or the surface liquid is allowed to accumulate and is skimmed off the surface by suitable means. The size of a liquid separator depends on various factors, for example: flow rate, liquid temperatures, liquid type, presence of solids, difference in the density between the carrier liquid and the surface liquid and also the presence of any chemicals which may affect the gravitational separation of such liquids. Further design features may take into account the rising velocity of a discrete particle of surface liquid, which may be contained within the carrier liquid mass. The rising velocity of a discrete particle is directly dependent upon the difference between the specific gravities of the carrier liquid and the surface liquid, together with the size of the discrete particle, which is usually expressed in microns. Owing to the fact that the minute particles dispersed within the carrier liquid rise at such a low rate, separators usually have to be of enormous size, which often makes them largely impractical. The reason for this is that the combined residence time of the liquid mass contained within the separator is far less than the time needed for a discrete particle to rise to the surface of the carrier liquid.
A further problem with the prior art is the "channelling effect", i.e. a situation where the entire volume of the liquid separator is not used efficiently and whereby the velocity at certain points in a liquid separator is far greater than that desired. As a result of channelling there is a great wastage of volume which inevitably translates into a decrease in efficiency.

Since the rising velocity is largely proportional to the size of the discrete particle, attempts have been made, to install, within separators, various types of plates, to coalesce these small particles of the surface liquid into large globules, which will immediately increase their rising velocity, and therefore ensure that the liquid rises to the surface within a sufficient time, prior to the discharge of the carrier liquid. It occurs often, however, that the design of these plates really disperse globules or discrete particles of oil to a greater extent and therefore inhibit efficient separation. In most cases, however, the plates provided are only marginally successful in achieving its desired aim.

In GB-A-2166967 a liquid separating device is described, said device comprising a primary separation chamber, with separate discharge outlet, a secondary or intermediate chamber provided with separate discharge outlet and lamella separators, and a discharge chamber to collect the carrier liquid to be discharged.

### OBJECT OF THE INVENTION

It is the aim of this invention to provide a liquid separator which has a set of plates which overcomes the problems associated with the prior art.

The said separator can be used in commerce and industry, for the decontamination or clarification of effluent, or for the recovery of oil spills at sea, as well as many other industrial applications.

It is a further object of the invention to provide a liquid separator, which comprises various compartments, which are so designed so as to evenly distribute the incoming contaminated liquid. The plurality of compartments and plates are so positioned, so that the aforementioned "channelling effect" is overcome. Separation is also conducted in four stages, which ensures the most efficient separation and quick discharge of separated liquids, through separate discharge openings provided in the various discharge chambers, with the discharge level of each opening being variably adjustable by means of an adjustment plate. The conglomeration of compartments and plates treat liquids to varying degrees of purity. The first two stages marginally treat the liquid, which is then distributed to a set of plates, hereinafter referred to as "entrapment plates", which remove minute particles of the surface liquid which are dispersed in the carrier liquid. The fourth stage is a safety stage which traps any surface liquid which has escaped separation, in the preceding three stages, so as to remove all traces of the surface liquid from the discharged carrier liquid.

The invention concerns a liquid separating device as delineated in claim 1, with preferred embodiments as defined in the dependent claims.

The primary separation chamber provides for the initial separation of surface liquid, which is discharged through an opening situated at the preferred uppermost portion of the chamber. Typically, the primary separation chamber comprises one tenth of the entire volume of the separator.
The liquid exiting the lowermost portion of the separation chamber is deflected upward by means of a deflection plate situated, generally, centrally on the base of the secondary separation chamber. Here further settling takes place and surface liquid exits by means of an opening, provided at the preferred uppermost portion of the secondary separation chamber. The carrier liquid flows over the deflection plate and into a set of distribution plates which is in communication with numerous entrapment plates, positioned in the tertiary separation chamber. The secondary and tertiary separation chambers are separated from one another by means of a plate which provides communication between the chambers at its lowermost end.

According to one aspect of the invention, there is provided a plate like device for use within a liquid separator. It is preferred that the entrapment plates are situated in the tertiary separation chamber. In the preferred form of the invention, the device consists of at least one sheet with numerous apertures, provided by means of perpendicular plates attached to at least one surface of the sheet. The said attachment may be by various means, depending on the type of materials and manufacture, for example: by means of welds or rivets. The liquid is introduced into the separation chamber and the carrier liquid together with minute particles of the surface liquid, flow between these plates which are stacked directly above one another, so as to form a pack through which the liquid flows.

The plates are separated from one another by means of narrow tubes or bars, so as to form channels between themselves for the passage of the contaminated carrier liquid. The spaces between the perpendicular plates form "quiescent zones", for the settling of minute particles of the surface liquid, which coalesce into larger droplets.

In a preferred form of the invention, the plate is positioned so that it defines an axis that is parallel to the direction of flow of liquid through the separator. In a further preferred form of the invention, the plates are constructed within a structure so as to form a pack of plates, all defining channels in between, for the unobstructed flow of carrier liquid containing minute particles of surface liquid. The said pack can be removeable, in whole or in part, from the body of the separator. One end of the pack is in communication with a receiving chamber, towards which the said pack is preferably inclined. Surface liquid captured by these plates flows along the channels created in between the perpendicular plates into the receiving chamber which forms part of the body of the separator. The said receiving chamber is designed in such a manner that it is not in the direct line of flow of the carrier liquid, and so creating another "quiescent zone". The said receiving chamber has a discharge opening, through which the separated surface liquid is discharged. The carrier liquid exits the pack formation and the flow is channelled, by means of a reverse flow plate, into the upper body of the tertiary separation chamber.

The upper body forms the fourth separation chamber which is provided with an inclined plate, which leads to a discharge opening, for the removal of any residual surface liquid. The carrier liquid now flows under a vertical plate, which separates the fourth stage separation chamber from the discharge opening of the carrier liquid. To prevent any carrier liquid from being discharged through openings provided for surface liquid, the discharge opening of the carrier liquid is operatively lower than all discharge openings provided for the surface liquid. All discharge openings are provided with adjustable overflow plates so that the difference between the discharge level of the surface and carrier liquids may be adjusted.

### BRIEF DESCRIPTION OF DRAWINGS

**Figure one** is a perspective view of the separator showing the relative position of the inlet, the primary separation chamber, the secondary separation chamber, the tertiary separation chamber and the entrapment plates which are located in the tertiary separation chamber. Shown also is the receiving chamber, into which the entrapment plates lead and the fourth stage separation chamber, leading to the discharge chamber which is connected to a discharge outlet.

**Figure two** is a side view of the separator broken away from the receiving chamber, showing side two of the primary separation chamber, the secondary separation chamber and the deflection plate, the tertiary separation chamber distribution plates, the entrapment plates, the reverse flow plate, the fourth stage separation chamber, inclined plate and the discharge chamber separation plate. Also shown are the surface liquid outlets in the primary separation chamber, the secondary separation chamber and the fourth stage separation chamber. Also shown is the carrier liquid outlet in the discharge chamber.

**Figure three** is a schematic side view of the primary separation chamber, comprising the inlet, the distribution plates, the surface liquid outlet of the primary separation chamber and the communication passage between the primary and secondary separation chambers.

**Figure four** is a perspective view of **Figure three**.

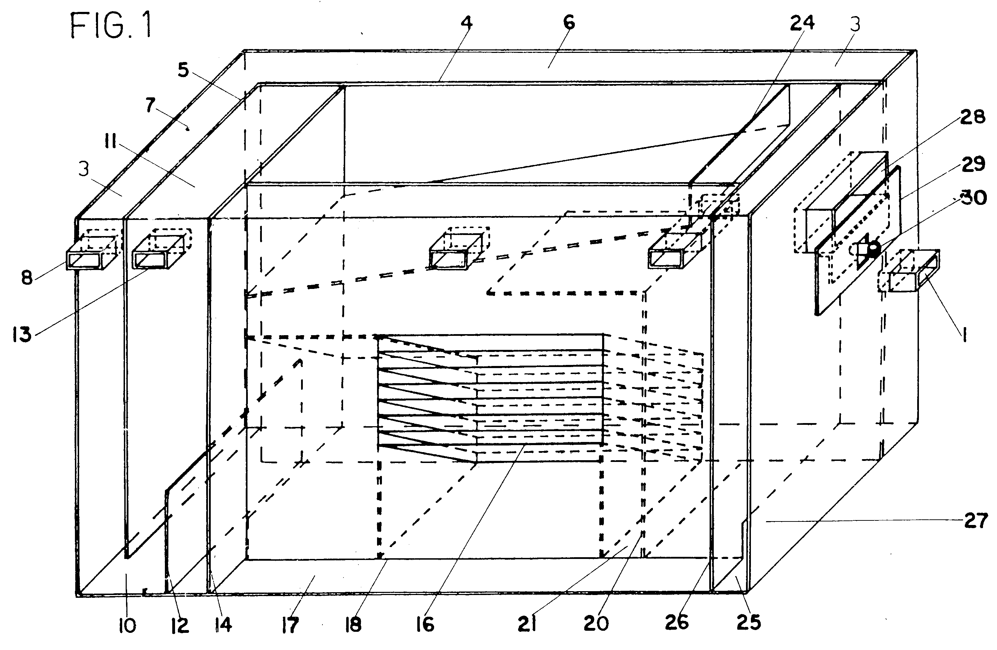

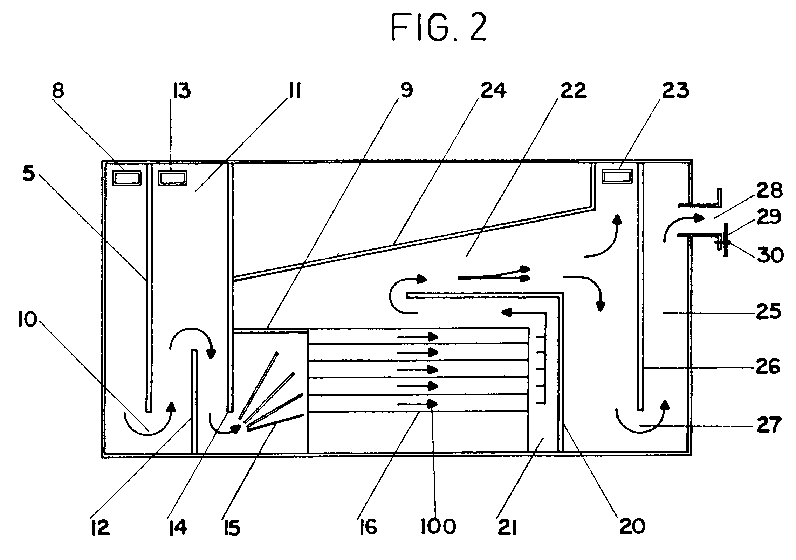

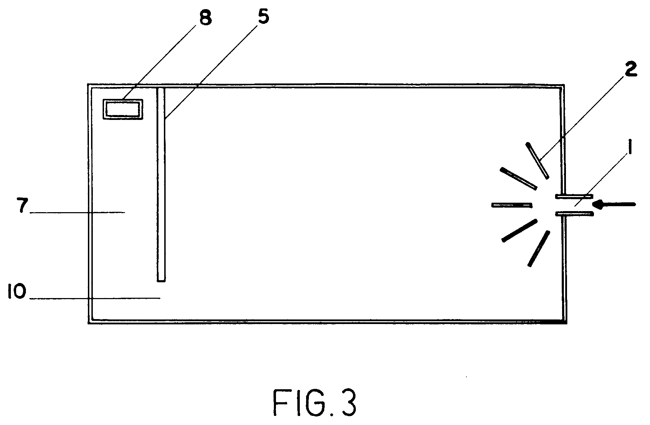

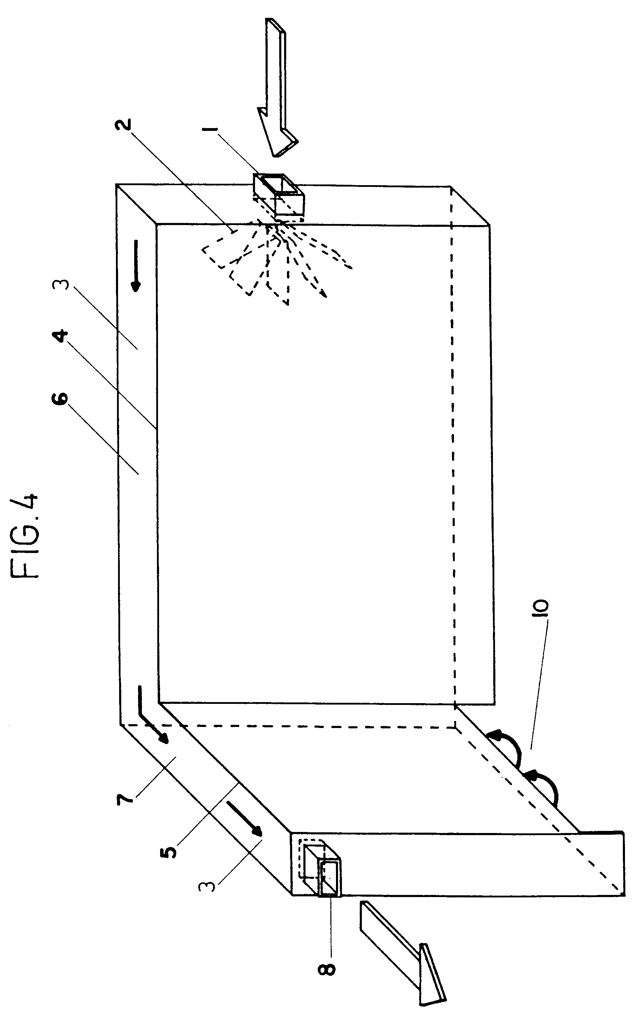

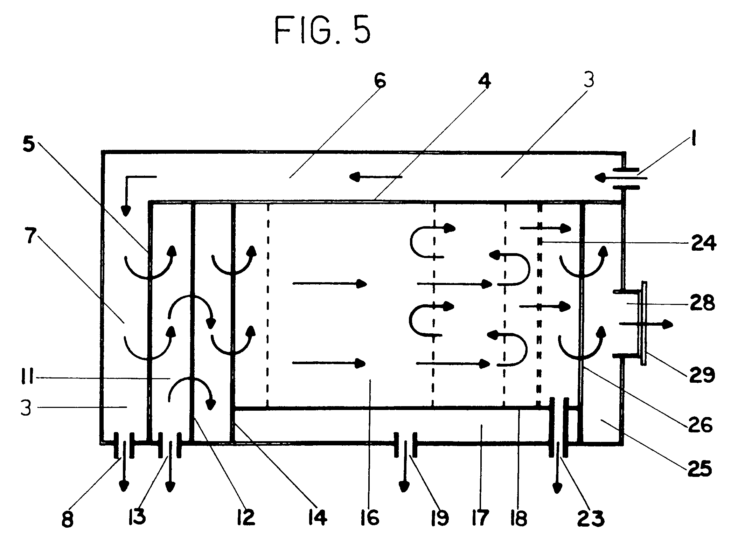

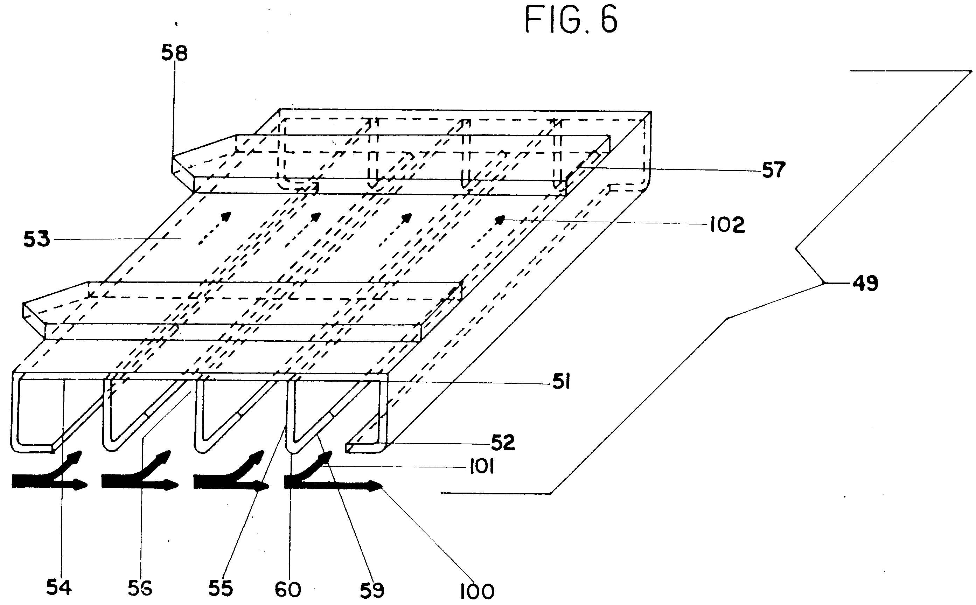

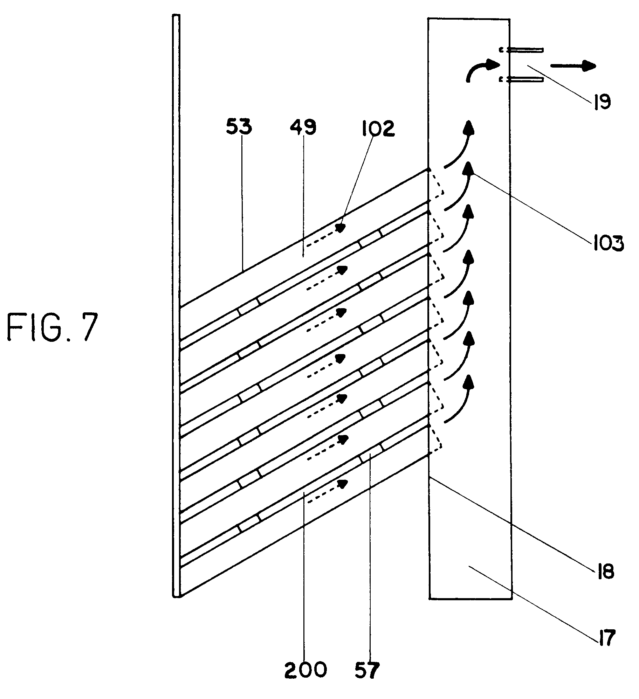

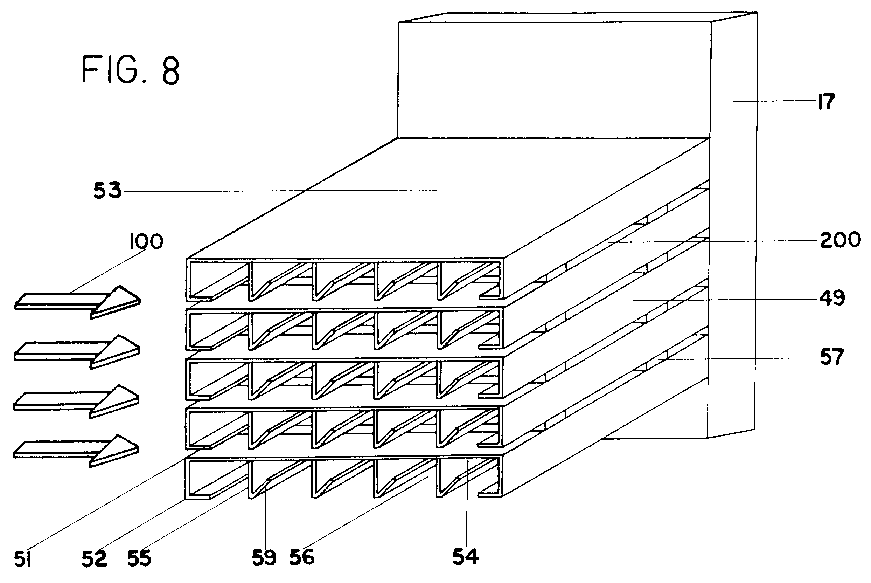

**Figure five** is a plan view of **figure one** indicating the relative position of side one and side two of the primary separation chamber, the secondary separation chamber together with the deflection plate located generally centrally within the secondary separation chamber, the column separation plate and the tertiary separation chamber housing the entrapment plates. The fourth stage separation chamber lies directly above the tertiary separation chamber. The figure also indicates the receiving chamber, the reverse flow plate, the vertical plate, the carrier liquid outlet, and the surface liquid outlets. The flow through the separator is indicated generally by the arrows.

**Figure six** is a perspective view of the entrapment plate indicating the plain surface, the perpendicular plates and the dividing strips. Also shown is the direction of flow of the carrier liquid and of the surface liquid, including the rounded edge and the preferred angle of the perpendicular plate.

**Figure seven** shows a side view of the entrapment plates in a pack formation leading into the receiving chamber.

**Figure eight** is a perspective view, of the entrapment plates pack and the receiving chamber.

### DETAILED DESCRIPTION OF THE DRAWINGS

**Figure one** is a perspective view of the liquid separating apparatus in accordance with the invention.

### Referring to figures three and four.

The contaminated liquid enters the separator via liquid inlet (1). The liquid is then evenly dispersed by mean of the primary distribution plates (2). Settling of large globules of the surface liquid takes place as the liquid flows along side one (6) of primary separation chamber (3) and then along side two (7) of primary separation chamber (3).
The shape of the primary separation chamber ensures an increased residence time. The primary separation chamber extends along two surfaces of the separator and the two surfaces are illustrated by numbers (4) and (5). Hereinafter, the surface (5) will be referred to as separation plate (5). The first side (6) of the primary separation chamber (3) is in communication with the second side (7). The second side (7) is provided with a discharge opening (8) for the discharge of the separated surface liquid. The direction of flow of the liquid is indicated by the arrows. The separation plate (5) provides a communication between the primary separation chamber (3) and the secondary separation chamber (11), by means of passage (10).

### Figures two and five.

**Figures two** and **five** refer to the separation plate (5) which does not extend all the way to the bottom of the liquid separator, but forms a communication between the primary separation chamber (3) and the secondary separation chamber (11) by means of passage (10). The partially decontaminated carrier liquid enters the secondary separation chamber (11) via communication passage (10). Here the entire mass of liquid is channelled upward by a deflection plate (12). Secondary settling of the surface liquid occurs in chamber (11) and the separated surface liquid exits the separator via discharge opening (13). The carrier liquid then flows under column separation plate (14) and via the distribution plates (15) and then into the set of entrapment plates (16). The liquid is evenly distributed to the set of entrapment plates (16) by the distribution plates (15). The liquid is prevented from entering directly into the fourth stage separation chamber by means of a seal plate (9).
The set of entrapment plates (16) is inclined towards and in communication with the receiving chamber (17) by means of an adequate opening, for such communication being provided for by plate (18). Surface liquid collected by entrapment plates (16) is discharged into the receiving chamber (17) and the said liquid exits the separator by rising to the top of chamber (17) and flowing out through discharge opening (19). The liquid exiting the entrapment plates (16) is deflected upwards by reverse flow plate (20) which also reverses the flow of the liquid. The said plate forms a communication passage (21) between the entrapment plates (16) and itself. The said communication passage leads the liquid into the fourth separation chamber (22) wherein further separation takes place. Settled oil in the said chamber exits via discharge opening (23). Partial coalescing of the oil is enhanced by an inclined plate (24) situated within the fourth separation chamber (22).
The fourth separation chamber (22) is separated from the discharge chamber (25) by means of vertical plate (26) which provides communication with the discharge chamber (25) via passage (27). Discharge chamber (25) is provided with a discharge opening (28). The level of the said discharge opening is variably adjustable by means of an adjustable plate (29). The said plate is attached to the body of the separator by suitable means, for example: attachment bolts (30).

### Referring to figures six, seven and eight.

**Figure six** is a perspective view of one entrapment plate (49) forming part of the pack of entrapment plates. The plate is preferably formed by bending a single sheet twice at both ends as indicated by numerals (51) and (52). Each angle should preferably be 90 degrees. In accordance with the invention the formation is such that the upper surface (53) is generally smooth and free of perforations or ridges. This creates a smooth and non turbulent flow through the plates. Perpendicular plates (55) are attached to the lower surface (54). It is preferred that the lower end of the perpendicular plate is bent inward towards the lower surface (54) at an angle of approximately 45 degrees, as indicated by reference numeral (59). It is a further preferred embodiment of the perpendicular plate that the angle formed which is in the direction of flow, as indicated by arrows (100), is rounded as indicated by numeral (60). In a preferred form of the invention, the angle formed between the lower surface (54) and the perpendicular plate (55) should be 90 degrees. The attached perpendicular plates (55) form entrapment channels (56) between themselves. The direction of flows is indicated by arrows (100). In a preferred form of the invention dividing strips (57) are attached to the upper surface of the plate. The dividing strips function as spacers between each entrapment plate, so that channels (200) are defined between themselves, for the passage of liquid. It is preferred that the end of the dividing strip (57) which is opposite to the direction of flow, be tapered as indicated by reference numeral (58). This has the effect of reducing turbulence and forming a more streamlined flow. The direction of flow of the carrier liquid is indicated by arrows (100). The dispersed droplets of surface liquid rise into entrapment channels (56) as indicated by arrows (101). Here they rise towards the lower surface of the plate (54) and then coalesce into larger globules which rise in the direction of receiving chamber (17), towards which the entrapment plate (49) is inclined, as indicated by arrows (102). Surface liquid entering the receiving chamber (17) rises to the top, as indicated by arrows (103), and is discharged through the discharge opening (19).

## Claims

1. Liquid separating device, comprising a primary separation chamber (3) provided with at least one separate discharge outlet (8), a secondary separation chamber (11) provided with at least one separate discharge outlet (13), and a discharge chamber (25), characterized in that it comprises a tertiary separation chamber containing at least one entrapment plate (16), said plate (16) being inclined towards, leads into and is in communication with at least one receiving chamber (17), provided with at least one separate discharge outlet (19), a fourth separation chamber (22) provided with at least one separate discharge outlet (23) and communicating with said discharge chamber (25), also said discharge chamber (25) having a separate discharge outlet (28), each one of said separate discharge outlets (8, 13, 19, 23), respectively of the primary (3), secondary (11), tertiary and fourth (22) separation chamber being for discharging separated surface liquid, in that said primary separation chamber (3) has a liquid inlet (1) and at least two distribution plates (2) near said liquid inlet (1), in that said primary separation chamber (3) forms a "L" shape running or positioned along two surfaces of the main body of the separator, and the furthest and lowermost end (10) of said primary chamber communicates with said secondary separation chamber (11), in that the receiving chamber (17) is connected to the main body of the separating device in such a manner that the said receiving chamber (17) is not in the direct line of flow of any carrier liquid, therefore forming a "quiescent zone" within said receiving chamber.

2. Liquid separating device according to claim 1, characterized in that said secondary separation chamber (11) has a deflection plate (12) connected to its base.

3. Liquid separating device according to claim 1, characterized in that said tertiary separation chamber houses at least two distribution plates (15).

4. Liquid separating device according to claim 1, characterized in that said fourth separation chamber (22) provides at least one inclined plate (24), angled toward said at least one separate discharge outlet (23).

5. Liquid separating device according to claim 1, characterized in that said entrapment plate (16; 49) provides a smooth upper surface (53) with at least a dividing strip (57) attached to the same surface and a lower surface (51) comprising channels (56).

6. Liquid separating device according to claim 5, characterized in that said entrapment plate (16; 49) provides a smooth upper surface (53) for the unobstructed flow between at least two of said entrapment plates (16; 49), each plate having channels (56) on its lower surface, shielded with respect to the direct line of flow and thus forming "quiescent zones" for the unobstructed accumulation and flow of surface liquid.

7. Liquid separating device according to claim 5, characterized in that a plurality of said entrapment plates (16; 49) provides at least one separation strip (57) bevelled at least one end (58), attached to the upper surface (53) of each plate (16; 49), so as to form channels (200) between themselves, and between the plates, for the passage of the liquid.

8. Liquid separating device according to claim 5, characterized in that it is provided at least one entrapment plate (16; 49), removable with respect to the liquid separating device, and usable in any different separating device employing the gravity.

9. Liquid separating device according to claim 1, characterized in that said receiving chamber (17) collects and discharges surface liquid coming from the entrapment plate (16; 49).

10. Liquid separating device according to claim 1, characterized in that said separate discharge outlets (8, 13, 19, 23, 28) have an adjustable overflow plate.

11. Liquid separating device according to claim 1, characterized in that it comprises at least one distribution plate provided in the gravity separator for the even distribution of liquid.

## Patentansprüche

1. Vorrichtung zur Abscheidung von Flüssigkeiten mit einer primären Abscheidungskammer (3), die mit mindestens einem getrennten Auslass (8) versehen ist, eine sekundäre Ausscheidungskammer (11), die mit mindestens einem getrennten Auslass (13) versehen ist und einer Auslasskammer (25), dadurch gekennzeichnet dass sie eine tertiäre, mit mindestens einem getrennten Auslass (23) versehene Ausscheidungskammer, die mindestens eine Fangplatte (16) die zu mindestens einer Aufnahmekammer (17) geneigt, sich zu derselben erstreckt und mit dieser in Verbindung steht, eine vierte, mit mindestens einem getrennten Auslass (23) versehene und mit der vorgenannten Ausscheidungskammer (25) in Verbindung stehende Ausscheidungskammer (22) enthält, wobei die vorgenannte Ausscheidungskammer (25) gleichfalls einen getrennten Auslass (28) aufweist und die vorgenannten getrennten Auslässe (8,13,19,23) der vorgenannten primären (3), sekundären (11), tertiäre bzw. vierten (22) Ausscheidungskammer jeweils zur Ausscheidung von getrennten Oberflächeflüssigkeiten vorgesehen sind, dadurch, dass die vorgenannte primäre Ausscheidungskammer (3) einen Flüssigkeiteinlass (1) und mindestens zwei Verteilungsplatten (2) in der Nähe des vorgenannten Flüssigkeitseintritts (1) hat, dadurch, dass die vorgenannte primäre Ausscheidungskammer (3) eine L-Form aufweist, die sich längst zwei Flächen des Hauptkörpers des Ausscheider erstreckt oder an diesen Flächen angeordnet ist und das letzte oder niedrigste Ende (10) der vorgenannten Primärkammer mit der vorgenannten sekundären Ausscheidungskammer (11) in Verbindung steht, dadurch, das die Aufnahmekammer (17) mit dem Hauptkörper der Ausscheidevorrichtung so verbunden ist, dass die vorgenannte Aufnahmekammer (17) nicht im direkten Flussrichtung jeder Trägerflüssigkeit befindet, wodurch eine "Ruhezone" innerhalb dieser Aufnahmekamme gebildet wird.

2. Vorrichtung zur Abscheidung von Flüssigkeiten nach Anspruch 1, dadurch gekennzeichnet, dass die vorgenannte sekundäre Ausscheidungskammer (11) eine Ablekungsplatte (12) aufweist, die mit seinem Gehäuse verbunden ist.

3. Vorrichtung zur Abscheidung von Flüssigkeiten nach Anspruch 1, dadurch gekennzeichnet, dass die vorgenannte tertiäre Ausscheidungskammer mindestens zwei Verteilungsplatten (12) enthält.

4. Vorrichtung zur Abscheidung von Flüssigkeiten nach Anspruch 1, dadurch gekennzeichnet, dass die vorgenannte vierte Ausscheidungskamme (22) mindestens eine schrägen Platte (24) aufweist, die zum vorgenannten mindestens einem getrennten Auslass (23) geneigt ist.

5. Vorrichtung zur Abscheidung von Flüssigkeiten nach Anspruch 1, dadurch gekennzeichnet, dass die vorgenannte Fangplatte (16;49) eine glatte Oberflächen (53), mit mindestens einem an diese Oberfläche befestigten Trennstreifen (57) und eine untere, mit Kanälen (56) versehene Fläche (51) aufweist.

6. Vorrichtung zur Abscheidung von Flüssigkeiten nach Anspruch 5, dadurch gekennzeichnet, dass die vorgenannte Fangplatten (16;49) eine glatte Oberflächen (53) für einen freien Durchfluss zwischen mindestens zwei der vorgennaten Fangplatten (16;49) hat, wobei jede Platte an seiner unteren Fläche mit Kanälen (56) versehen ist, welche gegenüber der direkten Flussleitung abgeschirmt sind und so eine "Ruhezone" für Speicherung und einen freien Durchluss der Oberflächeflüssigkeiten bilden.

7. Vorrichtung zur Abscheidung von Flüssigkeiten nach Anspruch 5, dadurch gekennzeichnet, dass die vorgenannte Fangplatte (16;49) eine Mehrzahl von diese Fangplatten (16;49) mindestens eine, am mindestens einem Ende (58) abgeschrägte Trennleiste (57) aufweist, die and der Oberfläche (53) jeder Platte (16;49) so befestigt ist, dass zwischen derselben und zwischen der Platten Durchflusskanäle für die Flüssigkeit gebildet werden.

8. Vorrichtung zur Abscheidung von Flüssigkeiten nach Anspruch 5, dadurch gekennzeichnet, dass eine mindesten eine vorgenannte Fangplatte (16;49) vorgesehen wird, die von der Abscheidungsvorrichtung abnehmbar und in jeder anderen, auf dem Schwerkraftprinzip arbeitenden Ausscheidungsvorrichtung anwendbar ist.

9. Vorrichtung zur Abscheidung von Flüssigkeiten nach Anspruch 1, dadurch gekennzeichnet, der vorgenannte Aufnahmekanal (17) die von der Fangplatte (16;49) einfliessende Oberflächeflüssigkeit auffängt und abfliessen lässt.

10. Vorrichtung zur Abscheidung von Flüssigkeiten nach Anspruch 1, dadurch gekennzeichnet, die vorgenannten getrennten Auslässe (8,13,19,23,28) eine einstellbare Überlauptplatte aufweisen.

11. Vorrichtung zur Abscheidung von Flüssigkeiten nach Anspruch 1, dadurch gekennzeichnet, dass sie mindesten eine Verteilungsplatte hat, die im Schwerkraft-Abscheider für eine gleichmässige Verteilung der Flüssigkeit angeordnet ist.

## Revendications

1. Dispositif pour la séparation des liquides, comprenant une chambre de séparation primaire (3) ayant au moins une ouverture de décharge (8) distincte, une chambre de séparation secondaire (11) munie d'au moins une ouverture de décharge (13) distincte et une chambre de décharge (25), caracterisé en ce qu'il comprend une chambre de séparation tertiaire ayant au moins un plateau de piégeage (16), ledit plateau de piégeage (16) étant incliné vers, conduit à et communicante avec une chambre d'admission (17), munie au moins d'une ouverture de décharge (19) distincte, une quatrième chambre de séparation (22) munie d'au moin une ouverture de décharge (23) distincte (23) et communicante avec la ladite chambre de décharge (25) ayant une ouverture de décharge (28) distincte, chacune desdites ouvertures de décharge distinctes (8, 13, 19, 23), respectivement de la primaire (3), secondaire (11), tertiaire et quatrième (22) chambre de séparation servant pour décharger de liquid de surface separée, en ce que ladite chambre de séparation primaire (3) a une ouverture d'entrée (1) et au moins deux plateaux de distribution (2) voisin de ladite ouverture d'entrée de liquid (1), en ce que ladit chambre de séparation primaire (3) a une forme à 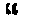 L 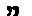 s'étendant ou placée le long de deux surfaces du corps principal du séparateur et l'extrémité derniere et plus bas (10) de ladite chambre de séparation étant en communication avec ladite chambre de séparation secondaire (1), en ce que ladite chambre d'admission (17) est jointe au corps principal du dispositif de séparation de façon que ladite chambre d'admission (17) ne se trouve pas dans la ligne de flux directe d'un quelconque liquide porteur, ainsi formant une 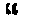 zone inactive 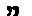 dans ladite chambre d'admission.

2. Dispositif de séparation des liquides selon la revendication 1, caractérisé en ce que ladite chambre de séparation secondaire (11) a un plateau de déflexion (12) uni a son base.

3. Dispositif de séparation des liquides selon la revendication 1, caractérisé en ce que ladite chambre de séparation tertiaire contient au moins deux plateaux de distribution (15).

4. Dispositif de séparation des liquides selon la revendication 1, caractérisé en ce que ladite quatrième chambre de séparation (22) a au moins un plateau incliné (24) orienté vers ladite au moins une ouverture de décharge distincte (23).

5. Dispositif de séparation des liquides selon la revendication 1, caractérisé en ce que ledit plateau de piégeage (16; 49) a une face supérieure lisse (53) avec au moins une bande de division (57) attachée à ladite face supérieure et une face inférieure (51) comprenant des canaux (56).

6. Dispositif de séparation des liquides selon la revendication 5, caractérisé en ce que ledit plateau de piégeage (16; 49) à un face supérieure lisse (53) pour le flux libre entre au moins deux desdits plateaux de piégeage (16; 49), chaque plateau ayant des canaux (56) sur sa face inférieure, blindés au regard de la ligne de flux directe et formant ainsi de 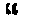 zones inactives 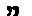 pour l'accumulation et le flux libres du liquide de surface.

7. Dispositif de séparation des liquides selon la revendication 5, caractérisé en ce que une pluralité de ces plateaux de piégeage (16; 49) a au moins une bande de séparation (56) arrondie à au moins une extrémité (58), attachée à la face supérieure (53) de chacun plateau (16; 49), pour former ainsi de canaux (200) entre les mêmes et entre les plateaux, pour le passage du liquide.

8. Dispositif de séparation des liquides selon la revendication 5, caractérisé en ce que il est prévu au moins un plateau de piégeage (16; 49), amovible par raport au dispositif de séparation des liquides et utilisable dans chaque dispositif de séparation différent, basé sur la gravité.

9. Dispositif de séparation des liquides selon la revendication 1, caractérisé en ce que ladite chambre d'admission (17) remasse et décharge le liquide de surface venant du plateau de piégeage (16; 49).

10. Dispositif de séparation des liquides selon la revendication 1, caractérisé en ce que lesdites ouvertures de décharges distinctes (8, 13, 19, 23, 28) ont un plateau de débordement réglable.

11. Dispositif de séparation des liquides selon la revendication 1, caractérisé en ce qu'il comprend au moins un plateau de distribution placé dans le séparateur à gravité pour la distribution uniforme du liquide.
